# FASCICULE DE BREVET EUROPEEN

(11) **EP 0 740 754 B1**
(45) Date de publication et mention de la délivrance du brevet: **24.03.1999**
(21) Numéro de dépôt: 94917701.8
(22) Date de dépôt: 01.06.1994
(51) Int. Cl.: F16L 9/12, F16L 11/12

(54) **TUBE POUR ALIMENTATION EN ESSENCE**
KRAFTSTOFFZUFUHRROHR
PETROL SUPPLY TUBE

(30) Priorité: 03.06.1993 FR 9306650
(43) Date de publication de la demande: 06.11.1996
(73) Titulaire: ELF ATOCHEM S.A., 92091 Paris Cédex 42 (FR)
(72) Inventeur: LOREK, Serge, F-27000 Evreux (FR); DENIZART, Olivier, F-27180 Cauge (FR); SIOUR, Daniel, F-78600 Maisons-Laffitte (FR)
(86) Numéro de dépôt international: FR9400640
(87) Numéro de publication internationale: WO9429626

(56) Documents cités:
- WO-A-93/21466
- DE-C- 3 821 723
- US-A- 3 561 493
- US-A- 4 907 625

## Description

### DOMAINE TECHNIQUE

La présente invention concerne un tube pour le transport ou l'alimentation en essence, en particulier des moteurs, plus particulièrement de moteurs d'automobiles. Le tube objet de l'invention est un tube à base de polyamide pour l'alimentation en essence.

Pour des raisons de sécurité et de préservation de l'environnement, les constructeurs automobiles imposent aux tubes d'essence des caractéristiques mécaniques: résistance et flexibilité, et des caractéristiques de résistance accrue à la perméabilité. Les tubes doivent être le moins perméable possible aux produits pétroliers et à leurs additifs, en particulier le méthanol.

### TECHNIQUE ANTERIEURE

Actuellement, les tubes de polyamide (tels que connus par exemple de DE-A-3 821 723) sont couramment utilisés dans l'industrie automobile. Les polyamides représentent un matériau idéal pour cette application de tube, leur résistance mécanique étant excellente et leur flexibilité étant suffisante pour qu'un tube supporte, sans casser, durant pratiquement toute la vie d'un véhicule, l'accumulation de mouvements de flexion. Ces tubes en polyamides ne répondent plus aux nouvelles exigences des constructeurs automobiles en ce qui concerne la perméabilité. Avec la présence, de plus en plus développée, de méthanol dans l'essence, la sensibilité des tubes en polyamide se manifeste par un gonflement du tube entraînant une diminution des propriétés mécaniques et des modifications dimensionnelles.

### EXPOSE DE L'INVENTION

L'objet de la présente invention est donc de remédier à ces inconvénients, tout en conservant les propriétés mécaniques des polyamides.

Ainsi, la présente invention fournit un tube, à base de polyamide, pour l'alimentation en essence, constitué d'une couche externe en polyamide, d'une couche médiane en polymère fluoré, de préférence en PVDF, et d'une couche interne de polyamide, ces couches étant respectivement liées entre elles par des couches de liant d'adhésion.

L'invention a donc pour objet un tube constitué de cinq couches formées respectivement de PA / liant / polymère fluoré / liant / PA (PA signifiant polyamide).

Ces tubes sont particulièrement appropriés pour l'alimentation en essence de moteurs.

Le polyamide utilisé est habituellement un polyamide aliphatique thermoplastique et notamment un polyamide 11 (PA-11), polyamide 12 (PA-12) ou polyamide 12,12 (PA-12,12) plastifié ou non, ou encore un polyamide 6 (PA-6) ou polyamide 6,6 (PA-6,6). Le polyamide peut éventuellement être un produit modifié pour résister aux chocs ou un copolymère. Les polyamides des couches externe et interne peuvent être identiques ou différents. Chaque couche de polyamide peut être formée d'une ou de plusieurs sous-couches, chacune de ces sous-couches étant formée d'un polyamide différent.

Ce polyamide peut aussi contenir des charges classiques pour les polyamides. La quantité de charge incorporée est elle aussi classique, et est fonction du cahier des charges des constructeurs automobiles. Une couche ou les deux couches de polyamide peuvent contenir de telles charges.

Selon un mode de réalisation, cette charge consiste en un rebroyé. Ce terme "rebroyé" désigne le broyat d'un tube malformé au cours du procédé de fabrication, et par là impropre à l'usage auquel on le destine, qui se trouve ainsi recyclé. Il est donc possible de broyer ces tubes malformés et de les incorporer dans la couche interne et/ou externe.

Parmi les polymères fluorés selon l'invention, on peut citer :
- les homo- et copolymères du fluorure de vinylidène (VF2),
- les homo- et copolymères du trifluoroéthylène (VF₃)
- les homo- et copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3. A titre d'exemple, on peut citer le polytétrafluoroéthylène (PTFE), le poly(éthylène-tétrafluoroéthylène) (ETFE).

Par polymère fluoré, on entend également des mélanges d'au moins 70% en poids des précédents avec d'autres polymères.

Parmi les polymères fluorés, on utilise avantageusement les homo- et copolymères de fluorure de vinylidène possédant au moins 70 % en poids de restes VF2, désignés dans tout le texte par PVDF. On entend également par PVDF les mélanges des précédents à au moins un autre polymère thermoplastique, à condition qu'au moins 50 % en poids de motifs VF2 soit présent dans le mélange.

### Chaque couche de polymère fluoré peut être formée d'une ou de plusieurs sous-couches, chacune de ces sous-couches étant formée d'un polymère fluoré différent.

Il est constaté qu'un tel tube constitué d'une couche médiane de PVDF liée par un liant d'adhésion à deux couches externe et interne de polyamide permet de diminuer d'un facteur au moins 10 la perméabilité par rapport à celle d'un tube équivalent en polyamide, tout en conservant les autres propriétés, telles que la résistance au choc à froid, dans les limites des cahiers des charges des constructeurs automobiles.

En vue d'assurer l'adhésion entre le polyamide et le polymère fluoré, on utilise de façon connue un polymère possédant des groupements carbonyles sur sa chaîne polymérique tels qu'un polyuréthanne, un polyamide, une polyurée, un polyester, un copolymère possédant des groupements éthylénique-oxyde de carbone, ou encore leurs dérivés copolymériques ou leurs mélanges.

A ce liant d'adhésion, peut être mélangé du polymère fluoré dans la proportion de 1 à 50% en poids. Lorsque le liant contient également du polymère fluoré, on préfère que le polymère fluoré présent dans le liant soit le même que celui qui se trouve dans la ou les couches de polymère fluoré adjacentes.

A ce liant d'adhésion, peuvent également être incorporés d'autres polymères ou copolymères thermoplastiques, à condition que le liant d'adhésion se trouve présent pour au moins 50% en poids dans le mélange. Les liants d'adhésion des couches situées, d'une part, entre la couche externe de polyamide et la couche de polymère fluoré, et d'autre part, entre la couche interne de polyamide et la couche de polymère fluoré peuvent être identiques ou différents. Chaque couche de liant peut être formée d'une ou de plusieurs sous-couches, chacune de ces sous-couches étant formée d'un liant différent.

Il est possible d'ajouter des couches supplémentaires tant à l'intérieur qu'à l'extérieur du tube. De telles couches peuvent être constituées de polymères, de gaines et autres, d'additifs de coloration, d'agent anti-UV, anti-oxydant et, de façon générale, tout couche connue dans l'art pouvant être ajoutée à une couche de polyamide.

Selon un mode de réalisation, l'épaisseur des couches de polyamide est comprise entre 0,3 et 1,8 mm, l'épaisseur de la couche de polymère fluoré est comprise entre 10 µm et 1 mm et l'épaisseur des couches de liant d'adhésion est comprise entre 10 µm et 1 mm.

Les épaisseurs des couches de polyamides et de liants peuvent être identiques ou différentes. De telles épaisseurs des constituants sont appropriées pour la fabrication de tubes d'alimentation d'essence pour moteurs dont le diamètre et généralement compris entre 6 et 12 mm.

Il est en effet indispensable que le polymère fluoré, et notamment le PVDF, soit lié de façon efficace au polyamide. Un tube qui ne présente pas de liaison entre le polymère fluoré et le polyamide ne peut posséder une bonne flexibilité et par conséquent ne peut être plié ou coudé facilement par formage à chaud ; dans ce cas, le matériau le plus mince forme des plis au cours de l'opération.

Par ailleurs, si les couches n'adhèrent pas entre elles, la condensation éventuelle des gaz entre deux couches polymère fluoré/polyamide peut, dans le temps, entraîner la déformation de la partie du tube la plus mince. En outre, les tubes étant reliés entre eux, ainsi qu'au réservoir d'essence et au carburateur par des raccords, ceux-ci ne peuvent assurer l'étanchéité s'ils s'appuient sur des couches dissociées. Enfin, dans le cas où le polymère fluoré est du PVDF et lorsque l'épaisseur de la couche de PVDF, à l'intérieur du tube, est très mince, par exemple de 10 à quelques dizaines de µm, et sans adhésion, une dépression dans le tube déforme de façon irréversible le film de polyfluorure de vinylidène rendant le tube inutilisable.

L'invention concerne aussi des tubes identiques aux précédents sauf leur diamètre plus important. Ils conviennent, par exemple, pour relier le stockeur d'essence enterré et la pompe de la station service.

Le tube selon l'invention est obtenu de façon connue par coextrusion des cinq composants dans les conditions d'extrusion connues propres à chacun des matériaux thermoplastiques. La coextrusion des cinq composants facilite l'extrusion de la couche médiane de polymère fluoré, notamment de PVDF, qui est relativement difficile lorsque cette couche n'est pas prise "en sandwich".

### MANIERES DE REALISER L'INVENTION

Les exemples suivants illustrent l'invention sans la limiter.

### EXEMPLE 1

Un tube de 8 mm de diamètre externe, obtenu de façon classique dans une installation de coextrusion pentamatière, est constitué de:
- une couche externe de PA-12 plastifié par 13 % en en masse de n-Butyl Benzène Sulfonamide (BBSA) de 600 µm d'épaisseur,
- une couche de 150 µm d'épaisseur d'un liant constitué d'un mélange de:
   . 65 parties en poids de polyuréthanne thermoplastique de type polyester de dureté Shore A mesurée selon la norme DIN 53-505 égale à 88 et de densité 1,18,
   . 35 parties en poids d'un copolymère éthylène/acétate de vinyle fonctionnalisé par greffage avec de l'anhydride maléique de point de fusion 90 °C et de Fluidité 6g/10 min à 190 °C sous 2,16 kg,
- une couche de PVDF qui est un homopolymère de VF2 de Fluidité 8g/10 min à 230 °C sous 5 kg de 250 µm d'épaisseur,
- une couche de 150 µm d'un liant identique au liant utilisé précédemment;
- une couche interne de 500 µm de PA-12 identique au polyamide 12 utilisé précédemment pour la couche externe.
Ce tube ainsi obtenu présente une très faible perméabilité à de l'essence super avec plomb et contenant 15% de méthanol; ce tube présente de bonnes propriétés mécaniques.

### EXEMPLE 2

Par co-extrusion, on réalise un tube PA/liant/PVDF/liant/PA calibré aux dimensions suivantes : diamètre extérieur 8 mm et diamètre intérieur 6 mm.

A titre comparatif, on extrude un tube monocouche de polyamide identique au tube précédent d'épaisseur 1 mm.

Le polyamide utilisé est un PA-12 plastifié par 7.5% en masse de n-Butyl Benzène Sulfonamide (BBSA), présentant un module de flexion de 450 MPa (Norme ISO 178) et une résilience au choc Charpy avec entaille de 9 kJ/m² à-40°C (Norme ISO 179).

Le liant est un mélange obtenu par extrusion sur extrudeuse double vis
* de PVDF#1 (homopolymère de VF2 de Fluidité 13 g /10 min à 230°C sous 5 kg (Norme ISO1133).(50% en masse),
* d'un copolymère de type acrylique-imide contenant les motifs 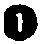 , 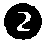 , 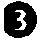 et 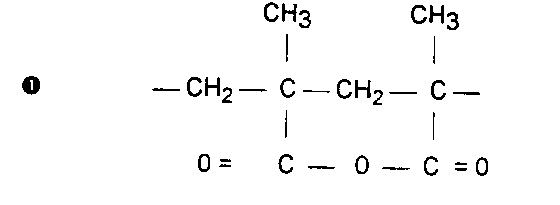 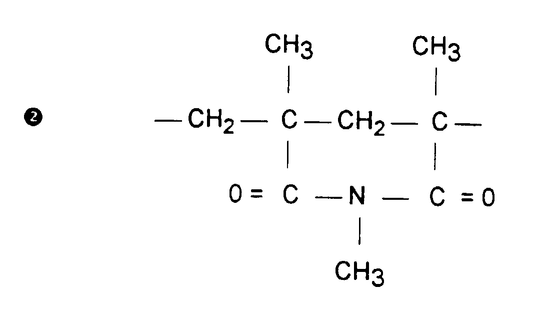 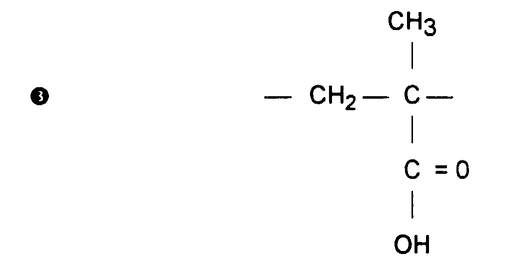 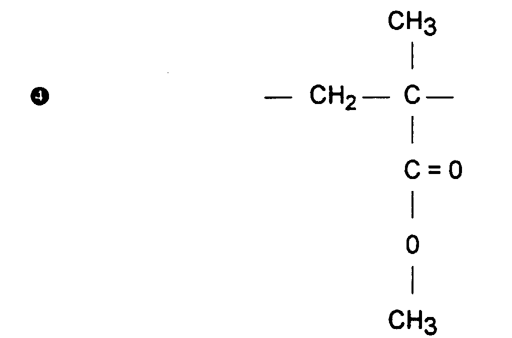 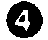 le pourcentage pondéral (exprimé par rapport à la masse totale de copolymères) des monomères acides et anhydres 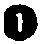 et 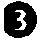 est égal à 66 %, le pourcentage pondéral (exprimé par rapport à la masse totale de copolymères) des monomères imides 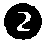 est compris entre 3 et 6 %, ledit copolymère présentant un module de flexion de 4.100 MPa (Norme ISO 178) (15%),
* et d'un modifiant choc type Core-Shell Methyl Méthacrylate Butadiène Styrène (MBS) (35%).

Le PVDF #2 de la couche centrale est un homopolymère de VF2 de Fluidité 8 g /10 min à 230°C sous 5 kg (Norme ISO1133).

Pour chacun des tubes, on mesure la résilience et la perméabilité dans une essence-test.

La norme utilisée pour juger de la résilience des tubes est la norme DIN 53453. Les essais sont menés à - 40°C.

Les essais de perméabilité sont menés selon la méthode "micro SHED test" par recirculation de l'essence-test dans les tubes. L'essence-test est :
- le TF1, mélange en volume d'Ethanol (9%) , Isooctane ( 45.5%) et de Toluène (45.5%). Dans ce cas la recirculation se fait à 40°C sous une pression de 2 bars.

| **Exemple** | **Structure du Tube** | **Perméabilité TFI- (gm**^{**2**}**/24h)** | **Choc DIN à -40°C** |
|---|---|---|---|
| 2 | PA-12 / Liant / PVDF #2/ Liant/ PA-12 (380µm / 65µm / 100µm / 65µm / 380 µm) | < 5 | 0C/10 |
| **comparatif** | PA-12 (1 mm) | 69.7 | 0C/10 |
| 0C/10 = Aucune casse sur 10 essais selon la norme. | | | |

## Revendications

1. Tube, à base de polyamide, pour l'alimentation en essence, constitué d'une couche externe en polyamide, d'une couche médiane en polymère fluoré, de préférence en PVDF, et d'une couche interne de polyamide, ces couches étant respectivement liées entre elles par des couches de liant d'adhésion.

2. Tube selon la revendication 1, dans lequel le polyamide utilisé est choisi dans le groupe consistant en: PA-12, PA-12,12, PA-11, PA-6 et PA-6,6.

3. Tube selon la revendication 1 ou 2, dans lequel le liant d'adhésion est un polymère ou un copolymère possédant des groupements carbonyles sur sa chaîne polymérique.

4. Tube selon l'une quelconque des revendications 1 à 3, où dans le ou les couches de polyamide, sont incorporées des charges.

5. Tube selon la revendication 4, dans lequel la charge consiste en un "rebroyé".

6. Tube selon l'une quelconque des revendications 1 à 5, dans lequel l'épaisseur des couches de polyamide est comprise entre 0,3 et 1,8 mm, l'épaisseur de la couche de polymère fluoré est comprise entre 10 µm et 1 mm et l'épaisseur des couches de liant d'adhésion est comprise entre 10 µm et 1 mm.

7. Tube selon l'une quelconque des revendications 1 à 6, destiné à l'alimentation en essence de moteurs.

8. Tube selon l'une quelconque des revendications 1 à 7, obtenu par extrusion de ses constituants.

## Patentansprüche

1. Schlauch auf Polyamidbasis für die Kraftstoffzufuhr, bestehend aus einer äußeren Schicht aus Polyamid, einer mittleren Schicht aus einem fluorierten Polymer, vorzugsweise aus PVDF, und einer inneren Schicht aus Polyamid, wobei diese Schichten miteinander jeweils durch Adhäsionshaftschichten verbunden sind.

2. Schlauch nach Anspruch 1, bei dem das verwendete Polyamid ausgewählt ist aus der Gruppe von PA-12, PA-12,12, PA-11, PA-6 und PA-6,6.

3. Schlauch nach Anspruch 1 oder 2, bei dem das Bindemittel zur Adhäsion ein Polymer oder ein Copolymer mit Carbonylgruppen in der Polymerkette ist.

4. Schlauch nach einem der Ansprüch 1 bis 3, wobei in die Polyamidschicht oder -schichten Füllstoffe eingearbeitet sind.

5. Schlauch nach Anspruch 4, bei dem der Füllstoff aus zerkleinertem Material besteht.

6. Schlauch nach einem der Ansprüche 1 bis 5, bei dem die Dicke der Polyamidschichten zwischen 0,3 und 1,8 mm liegt, die Dicke der fluorierten Polymerschicht zwischen 10 µm und 1 mm liegt und die Dicke der Adhäsionshaftschichten zwischen 10 µm und 1 µm liegt.

7. Schlauch nach einem der Ansprüche 1 bis 6, bestimmt zur Kraftstoffzufuhr für Motoren.

8. Schlauch nach einem der Ansprüche 1 bis 7, erhalten durch Extrusion seiner Bestandteile.

## Claims

1. Polyamide-based petrol feed pipe, consisting of an outer layer of polyamide, a middle layer of fluoropolymer, preferably of PVDF, and an inner layer of polyamide, these layers being respectively bonded to each other by layers of adhesive bonding agent.

2. Pipe according to Claim 1, in which the polyamide employed is chosen from the group consisting of PA-12, PA-12,12, PA-11, PA-6 and PA-6,6.

3. Pipe according to Claim 1 or 2, in which the adhesive bonding agent is a polymer or copolymer containing carbonyl groups in its polymer chain.

4. Pipe according to any one of Claims 1 to 3, where fillers are incorporated into the polyamide layer(s).

5. Pipe according to Claim 4, in which the filler consists of a "regrind".

6. Pipe according to any one of Claims 1 to 5, in which the thickness of the polyamide layers is between 0.3 and 1.8 mm, the thickness of the fluoropolymer layer is between 10 µm and 1 mm and the thickness of the layers of adhesive bonding agent is between 10 µm and 1 mm.

7. Pipe according to any one of Claims 1 to 6, intended for feeding petrol to engines.

8. Pipe according to any one of Claims 1 to 7, obtained by extrusion of its components.
